# FASCICULE DE BREVET EUROPEEN

(11) **EP 4 055 832 B1**
(45) Date de publication et mention de la délivrance du brevet: **18.10.2023**
(21) Numéro de dépôt: 20819806.9
(22) Date de dépôt: 03.11.2020
(51) Int. Cl.: H04Q 9/00

(54) **PROCEDE DE DETECTION DU BLOCAGE DE DISPOSITIFS DE COMPTAGE SUR UN RESEAU DE DISTRIBUTION**
VERFAHREN ZUR ERKENNUNG VON BLOCKIERTEN ZÄHLERN IN EINEM VERTEILUNGSNETZWERK
METHOD FOR DETECTING BLOCKED METERS IN A DISTRIBUTION NETWORK

(30) Priorité: 04.11.2019 FR 1912337
(43) Date de publication de la demande: 14.09.2022
(73) Titulaire: Suez International, 92040 Paris la Défense Cedex (FR)
(72) Inventeur: HAEFFNER, Hugues, 92040 PARIS LA DEFENSE CEDEX (FR); FAY, Gilles, 75019 PARIS (FR)
(74) Mandataire: Fédit-Loriot
(86) Numéro de dépôt international: PCT/FR2020/051981
(87) Numéro de publication internationale: WO 2021/089937

(56) Documents cités:
- EP-A1- 2 472 467
- US-A1- 2012 206 272

## Description

La présente invention se rapporte à un procédé de détection du blocage de dispositifs de comptage sur un réseau de distribution.

Dans le domaine du comptage de la consommation de ressources fournies par des réseaux de distribution, telles que de l'eau, du gaz ou de l'électricité, ou de tout autre ressource sujette au comptage par un compteur mécanique, il est bien connu que l'emploi de compteurs communicants a permis une importante simplification de la relève des compteurs par les exploitants.

Les compteurs communicants permettent une transmission automatique et régulière des données de consommation, mesurées par des organes de mesure mécaniques ou électroniques, en particulier par mesure de vitesses ou par mesure volumétrique dans le domaine de l'eau, vers un dispositif de centralisation des données de consommation.

La transmission de données de mesures de consommation s'effectue par des moyens de communication numériques, filaires ou radiofréquences. Ainsi, il n'est plus nécessaire que des agents de relève se déplacent pour relever les valeurs de consommation, connues sous le nom d'index de consommation, des compteurs.

Toutefois, lorsqu'un compteur est défaillant, l'intervention d'un technicien demeure nécessaire.

Une problématique est alors de détecter relativement rapidement et de manière fiable la défaillance d'un compteur communicant, en particulier un éventuel blocage des organes de mesure mécaniques, afin de réduire la période de consommation non comptabilisée.

Or, l'analyse des données de compteurs sans consommation est généralement effectuée manuellement, afin d'estimer si l'absence de consommation d'un compteur relève de la seule absence de consommation par le client ou si le compteur est bloqué. Toutefois l'analyse manuelle de l'ensemble des compteurs sans consommation est relativement longue et ne présente pas une fiabilité suffisante.

En outre, on sait que la proportion de compteurs bloqués est généralement inférieure à 20% des compteurs sans consommation, de sorte qu'une vérification systématique est coûteuse et relativement inefficace.

Voir aussi les publications US2012/206272 et EP 2 472 467.

Aussi, il existe le besoin d'une solution pour détecter de manière fiable les compteurs bloqués, en particulier les compteurs communicants bloqués, parmi les compteurs sans consommation récente.

A cet effet, on propose un procédé de détection du blocage de dispositifs de comptage de consommation d'une ressource, par exemple de l'eau, du gaz, de l'électricité, parmi un ensemble de dispositifs de comptage; chaque dispositif de comptage calculant une valeur d'index fonction de la consommation cumulée mesurée ;
lesdites valeurs d'index de chaque dispositif de comptage étant transmises à intervalle réguliers, par exemple toutes les 24 heures ou à toute autre fréquence adaptée, à un organe de centralisation mémorisant lesdites valeurs d'index avec leur date de transmission associée ;
la différence entre une première valeur d'index et une deuxième valeur d'index correspond à l'estimation de la consommation entre respectivement la première date et la deuxième date de transmissions associées ; et lorsque ladite différence est inférieure à une valeur de seuil minimal de consommation significative, ladite estimation de consommation définit une période d'arrêt du dispositif de comptage.

A titre d'exemple une valeur de seuil minimal de consommation significative comprend une consommation inférieure à 20 litres d'eau sur une période de 48 heures. Toutefois, cette valeur de seuil minimum séparant d'une part les consommations dites « non significatives », inférieures à la valeur de seuil, des consommations dites « significatives », supérieures à la valeur de seuil, peut être librement déterminée par l'homme du métier en fonction de la ressource considérée et du contexte de consommation de ladite ressource.

En d'autres termes, la dernière date d'arrêt du dispositif de comptage est la première date associée à un relevé d'index, à partir de laquelle démarre la dernière période d'arrêt détectée.

Étant donné que le procédé vise à détecter les compteurs bloqués, on ne sélectionne que les compteurs à l'arrêt lors de la dernière relève d'index ; aussi la dernière période d'arrêt s'étend entre la dernière date d'arrêt T₀ et la dernière relève d'index.

Ainsi la dernière date d'arrêt est associée à la première valeur d'index d'une suite d'index consécutifs allant jusqu'à la dernière relève d'index en date, et formant une période dont l'écart d'index est inférieur à une valeur de seuil minimal de consommation significative.

Le procédé comprenant :
- une étape de sélection d'un sous-ensemble de dispositifs de comptage parmi ledit ensemble de dispositifs de comptage, pour lesquels la différence des valeurs d'index sur une première durée prédéterminée, par exemple sur une durée allant de 7 jours à 60 jours, allant jusqu'à la dernière mémorisation d'une valeur d'index, est inférieure à ladite valeur de seuil minimal de consommation significative, formant dernière période d'arrêt du dispositif de comptage ; ladite première date de ladite dernière période d'arrêt correspondant à la dernière date d'arrêt du dispositif de comptage ;

et pour chaque dispositif de comptage dudit sous-ensemble de dispositifs de comptage :
   - une étape d'acquisition des valeurs d'index mémorisées sur une deuxième durée prédéterminée, par exemple sur une durée de sensiblement deux ans, antérieure à la dernière date d'arrêt dudit dispositif de comptage ;
   - une étape de génération d'une pluralité de variables synthétiques en fonction desdites valeurs d'index acquises pour la deuxième durée prédéterminée, comprenant le calcul de :
   - une première valeur représentative de la durée depuis laquelle lesdites valeurs d'index mémorisées du compteur sont inférieures à ladite valeur de seuil minimal de consommation significative;
   - une deuxième valeur de consommation totale de ladite ressource enregistrée par ledit dispositif de comptage ; et
   - une troisième valeur représentative du taux de périodes d'arrêt sur une troisième durée prédéterminée, par exemple sur un durée de sensiblement un an, inférieure à la deuxième durée prédéterminée et supérieure à la première durée prédéterminée ;
le procédé comprenant en outre une étape décisionnelle au cours de laquelle on détermine en fonction desdites variables synthétiques calculées si ledit dispositif de comptage est bloqué.

Ainsi, on obtient un procédé de détection relativement fiable et permettant de détecter de manière autonome les compteurs bloqués en ne prenant en compte que les données d'index de compteur disponibles.

Avantageusement et de manière non limitative, la troisième durée prédéterminée s'étend sur une période antérieure à 90 jours avant la dernière date d'arrêt. Ainsi, on exclut du taux de périodes de consommation non significatives, les 3 mois précédent l'arrêt total du compteur, car sur cette période de 90 jours, le compteur, s'il est défectueux, a pu présenter un comportement erratique rendant les données d'index sur cette période peu pertinentes.

Avantageusement et de manière non limitative, l'étape de génération comprend en outre le calcul d'une quatrième valeur correspondant au taux de périodes d'arrêt du dispositif de comptage sur intervalle de temps s'étendant 90 jours avant la dernière date d'arrêt. Ainsi, afin d'affiner la détection, on calcule, de manière isolée, le comportement du compteur sur la période de 90 jours précédant la dernière date d'arrêt.

Avantageusement et de manière non limitative, l'étape de génération comprend en outre le calcul d'une cinquième valeur correspondant à la durée moyenne des périodes d'arrêt du dispositif de comptage. Ceci permet d'affiner les paramètres de détection en prenant en compte la durée moyenne des périodes de consommation non significatives précédentes au cours de la deuxième période prédéfinie, ce qui permet de connaître la durée moyenne, alors que le compteur était fonctionnel et donc non-bloqué, pendant lequel il était resté sans consommation.

Avantageusement et de manière non limitative, l'étape de génération comprend en outre le calcul d'une sixième valeur correspondant à la plus longue période d'arrêt du dispositif de comptage parmi l'ensemble des périodes d'arrêt du dispositif de comptage. Ceci permet d'affiner le fonctionnement du procédé de détection en prenant en compte la durée maximale, alors que le compteur était fonctionnel et donc non-bloqué, pendant lequel il était resté sans consommation.

Avantageusement et de manière non limitative, l'étape de génération comprend en outre le calcul d'une septième valeur correspondant à la plus longue période pendant laquelle les valeurs d'index mémorisés sont supérieures à ladite valeur de seuil minimal de consommation significative. Ainsi on peut prendre en compte la durée moyenne de consommation ininterrompue du compteur avant sa dernière date d'arrêt.

Avantageusement et de manière non limitative, l'étape de génération comprend en outre le calcul d'une huitième valeur correspondant au nombre de périodes pendant lesquelles les valeurs d'index mémorisés sont successivement supérieures à ladite valeur de seuil minimal de consommation significative. Ainsi on compte le nombre de périodes de consommations significatives, ce qui permet de prendre en compte le nombre d'interruption et de reprise de la consommation enregistrée par le compteur au cours de la période de relevé d'index mémorisée.

Avantageusement et de manière non limitative, l'étape de génération comprend en outre le calcul d'une neuvième valeur correspondant au calcul d'une probabilité de blocage dudit dispositif en fonction de son modèle de fabrication et de son année de mise en service. Ainsi on peut prendre en compte la qualité de fabrication du compteur ainsi que son âge.

Avantageusement et de manière non limitative, l'étape décisionnelle comprend la mise en oeuvre d'un module d'apprentissage automatique supervisé, ledit module d'apprentissage automatique étant entraîné au cours d'une étape d'entraînement initiale. Ainsi, on peut optimiser la détection en mettant un oeuvre un module de détection par apprentissage automatique, permettant une détection relativement rapide et robuste.

En particulier, on met en oeuvre l'entraînement initial sur la base d'un jeu de données pour lequel on connaît l'état réel du compteur, bloqué ou non, aussi appelé jeu de données qualifiées.

Avantageusement et de manière non limitative, le procédé est adapté pour être mis en oeuvre une pluralité de fois, l'étape d'entraînement initiale n'étant mise en oeuvre qu'une fois, et une étape de réentraînement étant mise en oeuvre de manière répétée, selon une fréquence inférieure à la fréquence de mise en oeuvre du procédé. Ainsi, on peut optimiser le fonctionnement du procédé en ré-entraînant périodiquement le module d'apprentissage automatique, mais à une fréquence inférieure à la fréquence de détection de blocage, ceci permet d'augmenter la fiabilité de la détection.

Avantageusement et de manière non limitative, ledit module d'apprentissage automatique met en oeuvre un procédé d'arbre de régression et de classification,
ladite étape d'entraînement comprenant une étape de fourniture d'un ensemble de données d'entraînement, comprenant une pluralité de données de compteurs, comportant chacun une pluralité de valeurs d'index mémorisées sur ladite deuxième durée prédéterminée et/ou des valeurs synthétiques calculées, ainsi qu'une valeur décisionnelle précalculée,
chaque arbre décisionnel étant entraîné, au cours de ladite étape d'entraînement, à partir d'un sous-ensemble unique dudit ensemble de données d'entraînement.

Ainsi, on peut obtenir un procédé de détection par apprentissage automatique robuste et relativement peu coûteux en temps de calcul.

Avantageusement et de manière non limitative, ledit procédé de forêt d'arbres décisionnels met en oeuvre un procédé de classification des compteurs parmi au moins deux classes, bloqué et non-bloqué, en fonction desdites variables synthétiques générées, ledit module d'apprentissage étant entraîné à partir d'un ensemble de données d'entraînement dans lequel lesdites valeurs décisionnelles précalculées comprennent une classe parmi lesdites deux classes. Ainsi, le procédé de détection est relativement simple d'usage et les données de prédiction obtenues en sortie sont relativement simples à traiter.

Selon une alternative de mise en oeuvre avantageuse, ledit module d'apprentissage automatique mettant en oeuvre un procédé d'apprentissage supervisé de régression afin de calculer une valeur de probabilité de blocage, en fonction desdites variables synthétiques générées, ledit module d'apprentissage étant entraîné à partir d'un ensemble de données d'entraînement dans lequel lesdites valeurs décisionnelles précalculées comprennent une valeur de probabilité de blocage. Ainsi, le procédé de détection est relativement précis, et permet une interprétation plus poussée des données de prédiction obtenues en sortie.

Avantageusement et de manière non limitative, ledit procédé d'arbres de régression et de classification comprend un procédé de forêts d'arbres décisionnels. Ceci permet d'obtenir un procédé d'apprentissage automatique relativement simple à implémenter, robuste et d'exécution rapide.

Selon un mode de réalisation de l'invention, lesdites valeurs d'index sont mémorisées par intervalle de 24 heures ; la première durée prédéterminée étant comprise entre 1 jour et 60 jours, la deuxième durée prédéterminée correspondant sensiblement à deux années de sensiblement 365 jours, soit sensiblement 730 jours, et la troisième valeur prédéterminée correspondant sensiblement une année, soit sensiblement 365 jours.

L'invention concerne aussi un dispositif de détection du blocage de dispositifs de comptage de la consommation d'une ressource, par exemple de l'eau, du gaz, de l'électricité, parmi un ensemble de dispositifs de comptage ; chaque dispositif de comptage calculant une valeur d'index fonction de la consommation cumulée mesurée ;
lesdites valeurs d'index de chaque dispositif de comptage étant transmises à intervalle réguliers à un organe de centralisation mémorisant lesdites valeurs d'index avec leur date de transmission ;
la différence entre une première valeur d'index et une deuxième valeur d'index correspond à l'estimation de la consommation entre respectivement la première date et la deuxième date de transmissions associées ; et lorsque ladite différence est inférieure à une valeur de seuil minimal de consommation significative, ladite estimation de consommation définit une période d'arrêt du dispositif de comptage.

Le dispositif comprend :
- des moyens de sélection d'un sous-ensemble de dispositifs de comptage parmi ledit ensemble de dispositifs de comptage, pour lesquels la différence des valeurs d'index sur une première durée prédéterminée, allant jusqu'à la dernière mémorisation d'une valeur d'index, est inférieure à ladite valeur de seuil minimal de consommation significative, formant dernière période d'arrêt du dispositif de comptage ; ladite première date de ladite dernière période d'arrêt correspondant à la dernière date d'arrêt du dispositif de comptage ;
- des moyens d'acquisition, pour chaque dispositif de comptage dudit sous-ensemble de dispositifs de comptage, des valeurs d'index mémorisées une deuxième durée prédéterminée, antérieure à la dernière date d'arrêt dudit dispositif de comptage ;
- des moyens de génération d'une pluralité de variables synthétiques en fonction desdites valeurs d'index acquises pour chaque dispositif de comptage dudit sous-ensemble de dispositifs de comptage ;
lesdits moyens de génération étant adaptés pour calculer :
- une première valeur représentative de la durée depuis laquelle lesdites valeurs d'index mémorisées du compteur sont inférieures à ladite valeur de seuil minimal de consommation significative ;
- une deuxième valeur de consommation totale de ladite ressource enregistrée par ledit dispositif de comptage ; et
- une troisième valeur représentative du taux de périodes d'arrêt sur une troisième durée prédéterminée, inférieure à la deuxième durée prédéterminée et supérieure à la première durée prédéterminée ;
le dispositif comprenant aussi des moyens de calcul décisionnel adaptés pour déterminer, pour chaque dispositif de comptage dudit sous-ensemble de dispositifs de comptage, en fonction desdites variables synthétiques calculées si ledit dispositif de comptage est bloqué.

L'invention concerne aussi un système de comptage d'une ressource, telle que de l'eau, du gaz ou de l'électricité, comprenant un ensemble de dispositifs de comptage et un dispositif de détection tel que décrit précédemment.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
[Fig. 1] est une vue schématique d'un système de comptage selon un premier mode de réalisation de l'invention ;
[Fig. 2] est un organigramme du procédé mis en oeuvre par le dispositif de détection du système selon la figure 1 ;
[Fig. 3] est une vue schématique d'un ensemble de données d'entraînement pour le module d'apprentissage automatique mis en oeuvre par le procédé selon la figure 2.

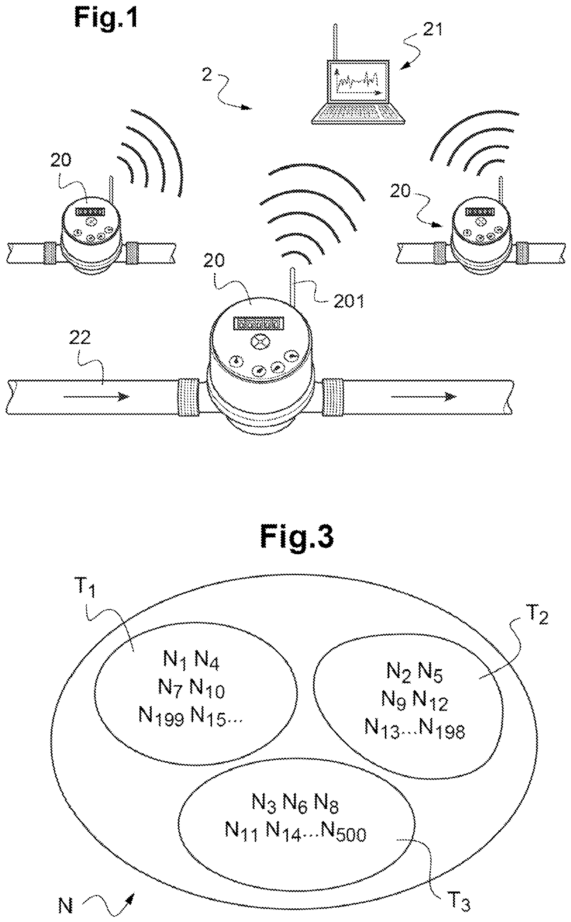

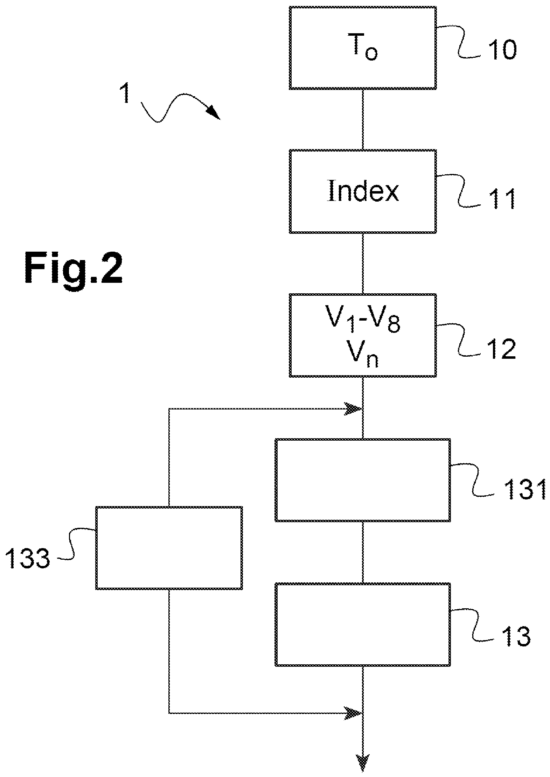

Les figures 1 à 3 se rapportant à un même mode de réalisation, elles seront commentées simultanément.

L'invention concerne un système de relève de consommation 2, ici un système de télé-relève 2, comprenant une pluralité de dispositifs 20 de comptage de consommation de ressources fournies sur réseau de distribution, telles que de l'eau, du gaz ou de l'électricité, et un organe de centralisation de données 21, ici un serveur distant 21 d'acquisition des données de télé-relève desdits dispositifs 20.

L'invention concerne en particulier la mise en oeuvre par le système 2 d'un procédé de détection 1 du blocage de dispositifs 20 de comptage.

Les exemples de ressources, eau, gaz ou électricité, sont toutefois donnés à titre non limitatif, et peuvent s'appliquer à toute autre ressource ou produit donc la consommation peut être mesurée en continu, en particulier tout produit distribué par le biais de réseau de distribution 22.

Dans la suite de la description, il sera fait référence de manière indifférente à un dispositif de comptage de consommation 20 sous le nom de compteur 20.

Dans ce mode de réalisation de l'invention le compteur 20 est un compteur numérique communicant 20, toutefois l'invention n'est pas limitée aux compteurs communicants et peut s'appliquer à tout type de compteur dont le relevé de données permet de constituer un historique de consommation, sous la forme d'une succession régulière d'index de consommation mémorisée.

Ici, le compteur 20 comprend des moyens de communication, en particulier des moyens de communication radiofréquence 201, pour émettre de manière régulière des relevés de consommation à un organe de centralisation des données.

L'organe de centralisation de données 21 est ici un serveur distant 21 communicant par radiofréquences avec le compteur 20.

Toutefois l'invention n'est pas limitée à ce système 2 particulier, on peut notamment prévoir que le compteur comprend des moyens de mises en oeuvre du procédé de détection de blocage et, en particulier, des moyens de transmission du blocage lorsqu'il est détecté.

Les moyens de communication peuvent être des moyens de communication radiofréquences mais aussi des moyens de communication en réseau filaire, par exemple par fibre optique, par réseau téléphonique, par courant porteur en ligne ou toute autre solution connue de l'homme du métier.

Le compteur coopère avec le réseau de distribution dont la consommation est mesurée, par exemple en entrée d'une installation domestique ou industrielle.

En particulier, dans le domaine du comptage de l'eau, le compteur comprend un organe de comptage, par exemple des moyens de mesure de vitesse de l'eau, une turbine, un organe de mesure volumétrique ou tout autre type d'organe adapté pour mesurer la quantité d'eau traversant passant dans la canalisation au voisinage du compteur.

L'organe de comptage émet un signal analogique de mesure transformé par un convertisseur analogique-numérique, notamment intégré à l'organe de comptage, de sorte à fournir au compteur un signal échantillonné de consommation.

Le compteur comprend alors un organe de calcul de l'index de référence du compteur. L'index est une valeur numérique définie en fonction de la nature de la ressource ou du produit dont la consommation est mesurée. Dans le domaine de la fourniture d'eau, et des fluides en général, l'index est une valeur numérique correspondant au volume total consommé mesuré par le compteur, par exemple en mètre cube.

Le compteur transmet à intervalle régulier, par intervalle de 24 heures, à titre non limitatif, la dernière valeur d'index calculée à l'organe de centralisation de données.

L'organe de centralisation de données procède alors à la mémorisation et à l'horodatage de la dernière valeur d'index calculée, et conserve dans une mémoire de stockage l'ensemble des index calculés acquis pour un même compteur sur une période prédéterminée, par exemple sur une durée de 2 ans, appelée deuxième durée prédéterminée, soit sensiblement 730 index acquis, avec un intervalle d'acquisition de 24 heures. Toutefois cette deuxième durée prédéterminée peut être différente de l'exemple donné, par exemple entre 2 et 5 ans.

L'organe de centralisation comprend aussi des moyens de calcul pour mettre en oeuvre un procédé de détection 1 d'un compteur bloqué.

Ces moyens de calcul sont ici un ordinateur, par exemple un serveur, comprenant un processeur et une interface de communication avec ladite mémoire de stockage.

Le procédé 1 est mis en oeuvre pour un sous-ensemble de compteurs d'un parc de compteurs. On entend par parc de compteurs l'ensemble des compteurs d'un réseau de distribution fournissant des données de comptage à l'organe de centralisation 21.

Afin de détecter les compteurs bloqués, on sélectionne dans le parc de compteurs un sous-ensemble de compteurs potentiellement bloqués.

Ce sous-ensemble de compteurs est déterminé par l'analyse des derniers index de consommation de chaque compteur.

Ainsi, on peut définir une valeur de seuil d'absence de consommation, autrement dit une durée de relevé à index constant, au-delà de laquelle le compteur est considéré comme potentiellement bloqué.

En particulier, dans ce mode de réalisation, pour un compteur de consommation d'eau, sur des compteurs d'installation domestiques, on sélectionne les compteurs présentant une absence de consommation sur les 60 derniers jours, aussi appelé première durée prédéterminée, et donc les 60 derniers relevés consécutifs présentant un index constant ou ne traduisant pas de consommation significative. Toutefois cette valeur est donnée à titre indicatif. Une durée inférieure permet de rendre la détection de blocage plus précoce mais impose une augmentation des compteurs analysés, a contrario une durée supérieure réduit la taille du sous-ensemble de compteurs mais augmente le temps de réaction lorsqu'un compteur est bloqué.

Pour des compteurs d'installations industrielles on peut par exemple prendre une valeur de 7 jours, sachant que contrairement aux installations domestiques, eu égard en particulier aux résidences secondaires, les installations industrielles ne connaissent généralement pas de période d'absence de consommation de plusieurs jours consécutifs.

Compte tenu du traitement opéré de manière distincte entre différents types de compteurs d'un même parc, par exemple entre les compteurs d'installations domestiques et les compteurs d'installations industrielles, présentant des profils de fonctionnement différents, on peut prévoir de mettre en oeuvre le procédé de détection de blocage de compteurs de manière séparé pour chaque ensemble de compteur groupés par type d'installation, ainsi un premier procédé sera mis en oeuvre pour les compteurs d'installations domestiques et un deuxième procédé de détection, indépendant du premier, sera mis en oeuvre pour les compteurs d'installation industrielles.

Le procédé 1 comprend ensuite une étape d'acquisition 11 de l'historique des index mémorisés du sous-ensemble des compteurs 20 du parc sélectionné, ici sur les 2 dernières années, aussi appelée deuxième durée prédéterminée.

Le procédé 1 met alors en oeuvre une deuxième étape de génération 12 d'une pluralité de variables synthétiques en fonction des données de comptage acquises, ici les données d'index, permettant ensuite de mettre en oeuvre l'étape décisionnelle 13.

Dans ce mode de réalisation de l'invention, on met en oeuvre les étapes de sélection 10, d'acquisition 11, de génération 12 et l'étape décisionnelle 13 de manière répétée, par exemple une fois toutes les 24h, ou selon toute autre fréquence de détection des compteurs bloqués adaptée.

Au cours de l'étape de génération 12, on calcule notamment la durée V1 depuis laquelle aucune consommation n'est enregistrée.

Ainsi la durée V1 correspond à la durée depuis laquelle les valeurs d'index mémorisées du compteur sont constantes.

Cette durée V1 est associée à la date horodatée de la première date T₀ depuis laquelle l'index n'a pas varié, aussi appelée dernière date d'arrêt T₀ du compteur.

En d'autres termes, la dernière date d'arrêt T₀ est la première date associée à un relevé d'index, à partir de laquelle démarre la dernière période d'arrêt détectée.

Étant donné que le procédé vise à détecter les compteurs bloqués, on ne sélectionne que les compteurs à l'arrêt lors de la dernière relève d'index ; aussi la dernière période d'arrêt s'étend entre la dernière date d'arrêt T₀ et la dernière relève d'index.

La valeur d'index la plus récente V2 est aussi prise en compte. En effet, plus l'index est faible, plus le compteur est récent, dans la mesure où il est rare qu'un compteur ait un index réinitialisé au cours de son cycle de vie. Aussi, la probabilité de blocage du compteur, notamment dans le cas d'une défaillance matérielle, est plus faible pour un compteur présentant un faible index.

La valeur d'index la plus récente V2 correspond ainsi à une valeur V2 de consommation totale de ladite ressource enregistrée par ledit dispositif de comptage.

On calcule aussi le taux de consommation non significatives V3 sur l'année précédant la dernière date d'arrêt T₀, aussi appelée troisième durée prédéterminée, soit sur une période de 365 jours précédant l'arrêt du compteur.

Aussi le taux de consommation non significative V3 correspond à pourcentage de temps pendant lequel des successions d'index ont été enregistré sans variation.

Dans ce mode de réalisation en particulier, le taux de consommations non significatives V3 est calculé de manière plus précise en excluant les données acquises 90 jours avant la dernière date d'arrêt T₀. En effet, dans l'hypothèse d'un compteur défaillant, son comportement peut être incohérent dans les semaines précédant son arrêt total. Aussi, on exclut les données proches de la dernière date d'arrêt, ici à 90 jours, et on calcule le taux d'occupation compris dans l'intervalle de 365 jours suivant [T₀-90-365 jours ; T₀-90 jours].

Ce taux de consommations non significatives V3, correspond donc au pourcentage de jours, sur un ensemble de 365 données acquises entre T₀-455 jours et T₀-90 jours.

Cette variable synthétique de taux de consommations non significatives V3 permet d'évaluer le taux d'utilisation du compteur sur une année complète, et permet d'opérer une distinction, notamment dans le domaine de la distribution sur réseau domestique, entre les résidences principales comprenant des taux de consommation non significative relativement faibles et les résidences secondaires, pouvant présenter des taux de consommation non significative élevées, par exemple supérieurs à 50%.

Il s'agit dans le mode principal de l'invention des trois variables synthétiques V1-V3 calculées pour évaluer dans la suite du procédé l'existence du blocage du compteur.

Toutefois selon des alternatives de mises en oeuvre de l'invention, d'autres variables synthétiques peuvent être calculées, permettant d'affiner la détection, moyennant une charge de calcul augmentée. Chacune des variables synthétiques suivantes peut être ajoutée indépendamment au procédé en plus des trois variables du mode de réalisation principal.

Selon une première variable synthétique optionnelle V4, on calcule le taux de consommations non significatives sur 90 jours avant la dernière date d'arrêt T₀. Cette variable peut notamment se substituer au calcul du taux sur un an précédant T₀-90 jours dans le cas où aucune donnée n'est disponible avant T₀-90 jours, par exemple si le blocage est consécutif à l'installation du compteur.

Une deuxième variable synthétique optionnelle V5 comprend le calcul de la longueur moyenne des périodes de consommations non significatives.

Ainsi, par exemple sur une durée de 2 ans avant la dernière date d'arrêt T₀ on identifie chaque série de relevées où la consommation est non significative, autrement toute série de valeur d'index consécutives à valeur égale, où inférieure à un seuil minimal. Dans le cas d'un compteur pouvant présenter des consommations négatives, alors ces consommations sont considérées comme non nulles.

Une troisième variable synthétique optionnelle V6 comprend le calcul de la plus longue période de consommation non significative ininterrompue. Autrement dit, on détermine parmi l'ensemble des périodes de consommation non significative enregistrées sur la durée d'acquisition, soit 2 ans dans ce mode de réalisation, la plus longue période de consommation non significative.

Une quatrième variable synthétique optionnelle V7 comprend le calcul de la longueur maximale de consommation significative ininterrompue. Autrement dit, on détermine parmi l'ensemble des périodes de consommation significative enregistrées sur la durée d'acquisition, soit 2 ans dans ce mode de réalisation, la plus longue durée de consommation significative.

On entend par consommation significative, une période de consommation au cours de laquelle la consommation est supérieure à un seuil minimal de consommation significative, par exemple une consommation inférieure à 20 litres d'eau sur une période de 48 heures. Toutefois, cette valeur de seuil minimum séparant d'une part les consommations dites « non significatives », inférieures à la valeur de seuil, des consommations dites « significatives », supérieures à la valeur de seuil.

Une cinquième variable synthétique optionnelle V8 comprend le calcul du nombre de périodes de consommation significative. Autrement dit, on calcule pour cette cinquième variable synthétique V8 le nombre de périodes de consommation significative, par conséquent entrecoupées de période de consommation non significative, aussi appelées périodes d'arrêt du compteur. En particulier on peut calculer cette cinquième variable sur une période de 2 ans précédant la dernière date d'arrêt T₀.

On peut aussi acquérir une sixième variable synthétique optionnelle, sous la forme d'une variable booléenne, permettant de connaître si, à T₀, le logement est vacant, par exemple si la donnée est disponible et connue par le l'organe de centralisation de données 21.

Une septième variable synthétique optionnelle V9 correspond au calcul d'une probabilité de blocage du modèle de compteur, en fonction du modèle et de son année de mise en oeuvre.

Cette septième variable synthétique optionnelle V9 permet d'estimer une probabilité de blocage du compteur en fonction du type de modèle du compteur et/ou son année de production. Il s'agit donc d'une probabilité de blocage lié à la fiabilité de chaque modèle de compteur en fonction des connaissances acquises sur chaque modèle de compteur.

Après cette étape de génération 2 d'une pluralité de variables synthétiques, on met en oeuvre une étape décisionnelle 13 pour déterminer en fonction desdites variables synthétiques calculées si le dispositif de comptage est bloqué.

L'étape décisionnelle peut être mise en oeuvre sous plusieurs formes connues de l'homme du métier.

On peut notamment définir une étape décisionnelle définissant une pluralité de seuils, appliqués à chaque variable synthétique mise en oeuvre, par exemple un seuil pour chacune des trois variables synthétiques selon le premier mode de réalisation de l'invention. Toutefois une telle approche, par seuillage des données, est relativement peu fiable et fournit un taux de faux positif trop important.

D'autres solutions déterministes ou d'autres procédés connus de l'homme du métier tel qu'un système expert comprenant un moteur d'inférence peuvent aussi être mises en oeuvre par l'homme du métier, bien que ces approches s'avèrent peu fiables et/ou coûteuses en temps de calcul.

Aussi, l'étape décisionnelle selon le premier mode de réalisation de l'invention met en oeuvre des étapes d'apprentissage automatique, en particulier un procédé de classification supervisé, visant à prédire en fonction des variables synthétiques calculées si un compteur appartient à une classe de compteur bloqué ou non bloqué.

En particulier, une technique mise en oeuvre, est un moteur d'apprentissage à forêts d'arbres décisionnels, en anglais *Random Forest*, qui est un procédé de classification et de régression supervisé relativement robuste, rapide et fiable.

Cette solution comprend la définition d'une pluralité d'arbre décisionnels de classification et de régression, *Classification and Regression Trees* en anglais, souvent abrégé *CART* ; en l'espèce des arbres de classification.

Chaque arbre est entraîné indépendamment sur la base de sous-ensemble T1-T3 de données sensiblement différentes issu d'un même ensemble de données d'entraînement N. Ainsi, pour un même ensemble de variables synthétiques, chaque arbre de la forêt d'arbre pourra fournir une prédiction différente des autres. Dans ce cas, la prédiction finale correspond à la prédiction étant le plus représentée parmi l'ensemble des prédictions de tous les arbres de la forêt d'arbres décisionnels.

La technique de forêt d'arbres décisionnels est dans le premier mode de réalisation mise en oeuvre de sorte à fournir une sortie dite de classification, connu sous le nom de Forêt Aléatoire de Classification, de sorte à fournir en sortie une valeur binaire de classe : bloqué ou non-bloqué.

Toutefois selon un mode de réalisation alternatif, la technique de forêt d'arbres décisionnels peut être mise en oeuvre de sorte à fournir une sortie dite de régression, comprenant une probabilité de blocage, généralement une valeur, ou une plage de valeur, comprise entre 0 et 1. On parle alors généralement de Forêts Aléatoire de Régression, en anglais *Random Forest Regression* ou *Regression Forest.*

On notera que l'invention n'est pas limitée à cette seule technique d'apprentissage automatique. En effet, tout procédé d'apprentissage automatique, tel que des apprentissages par renforcement, supervisés ou non supervisés pourront être mis en oeuvre par l'homme du métier.

On peut notamment selon une mise en oeuvre alternative employer la technique d'apprentissage supervisé connu sous le nom des k-plus proches voisins, en anglais *k-nearest neighbors*, ou aussi une technique d'arbre décisionnel seul, en anglais *decision tree.*

Des méthodes par réseaux de neurones, et en particulier les méthodes par apprentissage profond pourront aussi être mises en oeuvre.

Dans le contexte du premier mode de réalisation de l'invention, l'étape décisionnelle 132 est précédée d'une étape préliminaire 131 d'entraînement d'un moteur d'apprentissage, et est associée à une étape de réentraînement 133, pouvant être mise en oeuvre en parallèle, par exemple à intervalle réguliers, notamment une fois par semaine dans ce mode de réalisation, alors que le procédé de détection est mis en oeuvre une fois par jour.

On entend par moteur d'apprentissage un espace mémoire alloué comprenant des instructions logiques de construction d'une pluralité d'arbres décisionnels, des instructions logiques d'entraînement et de parcours de ces arbres décisionnels, et des instructions logiques d'obtention de prédictions, en particulier de classification prédictive, en fonction du parcours de la pluralité de arbres décisionnels obtenus et entraînés.

Chaque arbre décisionnel correspond à une portion d'un espace mémoire alloué, comprenant un chaînage logique, par noeuds, branches et feuilles d'extrémités, entre des ensembles de valeurs de variables synthétiques, chaque branche pouvant déboucher sur un noeud séparant l'espace logique en deux autres sous-branches ou une sous-branche et une feuille d'extrémité, ou deux feuilles d'extrémité, chaque feuille d'extrémité correspondant à une prédiction quant à caractère bloqué ou non du compteur.

Ainsi lors d'une première phase d'entraînement, on fournit au moteur d'apprentissage une pluralité de données d'entraînement, aussi appelées base d'apprentissage.

Cette base d'apprentissage comprend une pluralité de données correspondant à une pluralité de compteurs, chaque pluralité de donnée pour un compteur comprend les données d'index sur 2 ans, de sorte à permettre le calcul des variables synthétiques prises en compte par le moteur d'entraînement, aussi appelé attributs du compteur, et l'état de ce compteur à savoir bloqué ou non, aussi appelé classe du compteur.

La phase d'entraînement met en oeuvre une étape de calcul des variables synthétiques de sorte à construire les arbres sur les données synthétiques formant attributs et non sur les données brutes de relevé d'index.

La base d'apprentissage peut être constituée notamment de cas documentés, sous forme de retour d'expérience terrain, où le constat de blocage ou non blocage a été réalisé.

Le procédé correspond ainsi à un procédé d'apprentissage supervisé basé sur les variables synthétiques définies pour la mise en oeuvre du mode de réalisation.

A partir de ces données, on construit une pluralité d'arbres, autrement dit une pluralité de structures logiques décisionnelles, permettant de retrouver l'état de chaque compteur, bloqué ou non bloqué, appelé généralement sa classe, de la base d'apprentissage en fonction des données synthétiques, appelées attributs du compteur, par parcours logique de l'arbre.

Afin d'assurer une phase décisionnelle optimale, on définit une pluralité d'arbres décisionnels, par exemple entre 10 et 20 arbres, formant une forêt d'arbres décisionnels.

Chaque arbre de la forêt d'arbre est entraîné avec un sous ensemble de données issus d'une même base d'apprentissage différent des autres arbres. Ainsi chaque arbre est entraîné à partir d'un ensemble de données d'entraînement, aussi appelé une base d'apprentissage, différente des autres.

Dans ce mode de réalisation, en référence à la figure 4, un ensemble de données d'entraînement N comprenant 500 données de compteurs N1-N500, comportant chacune l'identifiant du compteur, éventuellement son année de production, et les relevés quotidien d'index sur 2 ans, ainsi que leur état bloqué ou non lors du dernier index relevé.

Ceci fournit une base relativement robuste pour assurer des prédictions fiables. Toutefois on peut prévoir une base d'apprentissage comprenant un plus grand nombre de données de compteur, en particulier si ces données sont déjà en possession de l'homme du métier lors de la mise en oeuvre.

L'étape d'entraînement préliminaire 131 est généralement mise en oeuvre une seule fois à l'initialisation du procédé selon l'invention, et n'est pas répétée à la même fréquence que les étapes de sélection 10, d'acquisition 11, de génération 12 et l'étape décisionnelle 13.

Ensuite on met en oeuvre l'étape décisionnelle 13, au cours de laquelle on le moteur d'apprentissage reçoit en entrée les variables synthétiques générées 12 pour le compteur, et fournit en sortie une prédiction de classification du compteur, parmi les deux classes bloqué ou non-bloqué.

Dans ce mode de réalisation, le moteur d'apprentissage mettant en oeuvre une forêt d'arbres décisionnels, chaque arbre est soumis aux variables synthétiques du compteur analysé, et chaque arbre fournissant une prédiction de classification.

Dans le cas ou tous les arbres ne fourniraient pas la même prédiction, la prédiction finale correspond dans ce mode de réalisation à la prédiction la plus représentée ; on parle habituellement de prédiction par vote majoritaire.

Dans le mode de réalisation alternatif mettant en oeuvre une forêt d'arbres décisionnels sous la forme de Forêts Aléatoire de Régression, la prédiction finale peut comprendre le calcul d'une probabilité de blocage moyenne, en fonction de l'ensemble des valeurs de probabilités prédites obtenues pour chaque arbre de régression, éventuellement après filtrage ou exclusion des valeurs extrêmes.

Ainsi, après l'étape décisionnelle 13, on obtient alors pour chaque compteur soit une classification, bloqué ou non bloqué, soit une probabilité de blocage, permettant de savoir de manière relativement fiable si ce compteur est bloqué ou seulement à l'arrêt dans un fonctionnement normal.

A intervalle régulier, par exemple tous les mois, soit sensiblement tous les 30 jours, la forêt d'arbre décisionnelle peut être ré-entraînée, par la fourniture d'une nouvelle base d'apprentissage, ou d'une base d'apprentissage mise à jour.

## Revendications

1. Procédé de détection du blocage de dispositifs de comptage (20) de consommation d'une ressource, par exemple de l'eau, du gaz, de l'électricité, parmi un ensemble de dispositifs de comptage (20); chaque dispositif de comptage calculant une valeur d'index fonction de la consommation cumulée mesurée ;
lesdites valeurs d'index de chaque dispositif de comptage étant transmises à intervalle réguliers à un organe de centralisation mémorisant lesdites valeurs d'index avec leur date de transmission associée ;
la différence entre une première valeur d'index et une deuxième valeur d'index correspond à l'estimation de la consommation entre respectivement la première date (T₀) et la deuxième date de transmissions associées ; et lorsque ladite différence est inférieure à une valeur de seuil minimal de consommation significative, ladite estimation de consommation définit une période d'arrêt du dispositif de comptage ;
le procédé étant **caractérisé en ce qu'**il comprend :
- une étape de sélection (10) d'un sous-ensemble de dispositifs de comptage parmi ledit ensemble de dispositifs de comptage, pour lesquels la différence des valeurs d'index sur une première durée prédéterminée, allant jusqu'à la dernière mémorisation d'une valeur d'index, est inférieure à ladite valeur de seuil minimal de consommation significative, formant dernière période d'arrêt du dispositif de comptage ; ladite première date (T₀) de ladite dernière période d'arrêt correspondant à la dernière date d'arrêt (T₀) du dispositif de comptage ;
et pour chaque dispositif de comptage dudit sous-ensemble de dispositifs de comptage :
- une étape d'acquisition (11) des valeurs d'index mémorisées sur une deuxième durée prédéterminée, antérieure à la dernière date d'arrêt (T₀) dudit dispositif de comptage (20);
- une étape de génération (12) d'une pluralité de variables synthétiques (Vn) en fonction desdites valeurs d'index acquises pour la deuxième durée prédéterminée, comprenant le calcul de :
- une première valeur (V1) représentative de la durée depuis laquelle lesdites valeurs d'index mémorisées du compteur sont inférieures à ladite valeur de seuil minimal de consommation significative;
- une deuxième valeur (V2) de consommation totale de ladite ressource enregistrée par ledit dispositif de comptage ; et
- une troisième valeur (V3) représentative du taux de périodes d'arrêt sur une troisième durée prédéterminée, inférieure à la deuxième durée prédéterminée et supérieure à la première durée prédéterminée ;
le procédé comprenant en outre une étape décisionnelle (13) au cours de laquelle on détermine en fonction desdites variables synthétiques calculées si ledit dispositif de comptage est bloqué.

2. Procédé selon la revendication 1, **caractérisé en ce que** la troisième durée prédéterminée s'étend sur une période antérieure à 90 jours avant la dernière date d'arrêt (T₀).

3. Procédé selon la revendication 1 ou 2, **caractérisé en ce que** l'étape de génération (12) comprend en outre le calcul d'une quatrième valeur (V4) correspondant au taux de périodes d'arrêt du dispositif de comptage sur un intervalle de temps s'étendant 90 jours avant la dernière date d'arrêt (T₀)

4. Procédé selon l'une quelconque des revendications 1 à 3, **caractérisé en ce que** l'étape de génération (12) comprend en outre le calcul d'une cinquième valeur (V5) correspondant à la durée moyenne des périodes d'arrêt du dispositif de comptage.

5. Procédé selon l'une quelconque des revendications 1 à 4, **caractérisé en ce que** l'étape de génération (12) comprend en outre le calcul d'une sixième valeur (V6) correspondant à la plus longue période d'arrêt du dispositif de comptage parmi l'ensemble des périodes d'arrêt du dispositif de comptage.

6. Procédé selon l'une quelconque des revendications 1 à 5, **caractérisé en ce que** l'étape de génération (12) comprend en outre le calcul d'une septième valeur (V7) correspondant à la plus longue période pendant laquelle les valeurs d'index mémorisés sont supérieures à ladite valeur de seuil minimal de consommation significative.

7. Procédé selon l'une quelconque des revendications 1 à 6, **caractérisé en ce que** l'étape de génération (12) comprend en outre le calcul d'une huitième valeur (V8) correspondant au nombre de périodes pendant lesquelles les valeurs d'index mémorisés sont successivement supérieures à ladite valeur de seuil minimal de consommation significative.

8. Procédé selon l'une quelconque des revendications 1 à 7, **caractérisé en ce que** l'étape de génération (12) comprend en outre le calcul d'une neuvième valeur (V9) correspondant au calcul d'une probabilité de blocage dudit dispositif en fonction de son modèle de fabrication et de son année de mise en service.

9. Procédé selon l'une quelconque des revendications 1 à 8 **caractérisé en ce que** l'étape décisionnelle (13) comprend la mise en oeuvre d'un module d'apprentissage automatique supervisé, ledit module d'apprentissage automatique étant entraîné au cours d'une étape d'entraînement initiale (131).

10. Procédé selon la revendication 9, **caractérisé en ce qu'**il est adapté pour être mis en oeuvre une pluralité de fois, l'étape d'entraînement initiale (131) n'étant mise en oeuvre qu'une fois, et une étape de réentraînement (133) étant mise en oeuvre de manière répétée, selon une fréquence inférieure à la fréquence de mise en oeuvre du procédé.

11. Procédé selon la revendication 9 ou 10, **caractérisé en ce que** ledit module d'apprentissage automatique met en oeuvre un procédé d'arbre de régression et de classification,
ladite étape d'entraînement (131) comprenant une étape de fourniture d'un ensemble de données d'entraînement (N), comprenant une pluralité de données de compteurs (N1-N500), comportant chacun une pluralité de valeurs d'index mémorisées sur ladite deuxième durée prédéterminée et/ou des valeurs synthétiques calculées, ainsi qu'une valeur décisionnelle précalculée,
chaque arbre décisionnel étant entraîné, au cours de ladite étape d'entraînement (131), à partir d'un sous-ensemble unique (T1-T3) dudit ensemble de données d'entraînement (N).

12. Procédé selon la revendication 11, **caractérisé en ce que** ledit procédé de forêt d'arbres décisionnels module d'apprentissage automatique met en oeuvre un procédé de classification des compteurs parmi au moins deux classes, bloqué et non-bloqué, en fonction desdites variables synthétiques générées (12), ledit module d'apprentissage étant entraîné à partir d'un ensemble de données d'entraînement dans lequel lesdites valeurs décisionnelles précalculées comprennent une classe parmi lesdites deux classes.

13. Procédé selon la revendication 11, **caractérisé en ce que** ledit module d'apprentissage automatique met en oeuvre un procédé d'apprentissage supervisé de régression afin de calculer une valeur de probabilité de blocage, en fonction desdites variables synthétiques générées (12), ledit module d'apprentissage étant entraîné à partir d'un ensemble de données d'entraînement dans lequel lesdites valeurs décisionnelles précalculées comprennent une valeur de probabilité de blocage.

14. Procédé selon l'une quelconque des revendications 11 à 13, **caractérisé en ce que** ledit procédé d'arbres de régression et de classification comprend un procédé de forêts d'arbres décisionnels.

15. Procédé selon l'une quelconque des revendications 1 à 14, **caractérisé en ce que** lesdites valeurs d'index sont mémorisées par intervalle de 24 heures ; la première durée prédéterminée étant comprise entre 1 jour et 60 jours, la deuxième durée prédéterminée correspondant sensiblement à deux années de sensiblement 365 jours, soit sensiblement 730 jours, et la troisième valeur prédéterminée correspondant sensiblement une année, soit sensiblement 365 jours.

16. Dispositif de détection du blocage de dispositifs de comptage de la consommation d'une ressource, par exemple de l'eau, du gaz, de l'électricité, parmi un ensemble de dispositifs de comptage ; chaque dispositif de comptage calculant une valeur d'index fonction de la consommation cumulée mesurée ; lesdites valeurs d'index de chaque dispositif de comptage étant transmises à intervalle réguliers à un organe de centralisation mémorisant lesdites valeurs d'index avec leur date de transmission ;
la différence entre une première valeur d'index et une deuxième valeur d'index correspond à l'estimation de la consommation entre respectivement la première date (T₀) et la deuxième date de transmissions associées ; et lorsque ladite différence est inférieure à une valeur de seuil minimal de consommation significative, ladite estimation de consommation définit une période d'arrêt du dispositif de comptage ;
**caractérisé en ce qu'**il comprend :
- des moyens de sélection (10) d'un sous-ensemble de dispositifs de comptage parmi ledit ensemble de dispositifs de comptage, pour lesquels la différence des valeurs d'index sur une première durée prédéterminée, allant jusqu'à la dernière mémorisation d'une valeur d'index, est inférieure à ladite valeur de seuil minimal de consommation significative, formant dernière période d'arrêt du dispositif de comptage ; ladite première date (T₀) de ladite dernière période d'arrêt correspondant à la dernière date d'arrêt (T₀) du dispositif de comptage ;
- des moyens d'acquisition (11), pour chaque dispositif de comptage dudit sous-ensemble de dispositifs de comptage, des valeurs d'index mémorisées une deuxième durée prédéterminée, antérieure à la dernière date d'arrêt (T₀) dudit dispositif de comptage (20);
- des moyens de génération (12) d'une pluralité de variables synthétiques (Vn) en fonction desdites valeurs d'index acquises pour chaque dispositif de comptage dudit sous-ensemble de dispositifs de comptage ;
lesdits moyens de génération (12) étant adaptés pour calculer :
- une première valeur (V1) représentative de la durée depuis laquelle lesdites valeurs d'index mémorisées du compteur sont inférieures à ladite valeur de seuil minimal de consommation significative ;
- une deuxième valeur (V2) de consommation totale de ladite ressource enregistrée par ledit dispositif de comptage ; et
- une troisième valeur (V3) représentative du taux de périodes d'arrêt sur une troisième durée prédéterminée, inférieure à la deuxième durée prédéterminée et supérieure à la première durée prédéterminée ;
le dispositif comprenant aussi des moyens de calcul décisionnel (13) adaptés pour déterminer, pour chaque dispositif de comptage dudit sous-ensemble de dispositifs de comptage, en fonction desdites variables synthétiques calculées si ledit dispositif de comptage est bloqué.

17. Système de comptage d'une ressource, telle que de l'eau, du gaz ou de l'électricité, comprenant un ensemble de dispositifs de comptage (20) et un organe de centralisation comportant un dispositif de détection (21) selon la revendication 16.

## Patentansprüche

1. Verfahren zum Erkennen der Blockierung von Zählvorrichtungen (20) für den Verbrauch einer Ressource, zum Beispiel Wasser, Gas, Elektrizität, in einem Satz von Zählvorrichtungen (20); wobei jede Zählvorrichtung einen Indexwert berechnet, der vom gemessenen kumulierten Verbrauch abhängig ist;
wobei die Indexwerte jeder Zählvorrichtung in regelmäßigen Intervallen an ein Zentralisierungsorgan übertragen werden, das die Indexwerte mit ihrem zugehörigen Übertragungsdatum speichert;
die Differenz zwischen einem ersten Indexwert und einem zweiten Indexwert der Schätzung des Verbrauchs zwischen jeweils dem ersten zugehörigen Übertragungsdatum (T₀) und dem zweiten zugehörigen Übertragungsdatum entspricht; und wenn die Differenz kleiner ist als ein minimaler Schwellenwert signifikanten Verbrauchs, die Verbrauchsschätzung eine Stillstandsperiode der Zählvorrichtung definiert;
wobei das Verfahren **dadurch gekennzeichnet ist, dass** es umfasst:
- einen Schritt des Auswählens (10) eines Teilsatzes von Zählvorrichtungen in dem Satz von Zählvorrichtungen, bei denen die Differenz der Indexwerte über eine erste vorbestimmte Dauer, die bis zur letzten Speicherung eines Indexwerts geht, kleiner ist als der minimale Schwellenwert signifikanten Verbrauchs, wodurch die letzte Stillstandsperiode der Zählvorrichtung gebildet wird; wobei das erste Datum (T₀) der letzten Stillstandsperiode dem letzten Stillstandsdatum (T₀) der Zählvorrichtung entspricht;
und für jede Zählvorrichtung des Teilsatzes von Zählvorrichtungen:
- einen Schritt des Erfassens (11) der Indexwerte, die über eine zweite vorbestimmte Dauer gespeichert wurden, die vor dem letzten Stillstandsdatum (T₀) der Zählvorrichtung (20) liegt;
- einen Schritt des Erzeugens (12) einer Vielzahl von synthetischen Variablen (Vn) in Abhängigkeit von den erfassten Indexwerten für die zweite vorbestimmte Dauer, umfassend das Berechnen:
- eines ersten Werts (V1), der für die Dauer repräsentativ ist, seit der die gespeicherten Indexwerte des Zählers kleiner sind als der minimale Schwellenwert signifikanten Verbrauchs;
- eines zweiten Werts (V2) des Gesamtverbrauchs der Ressource, der von der Zählvorrichtung aufgezeichnet wurde; und
- eines dritten Werts (V3), der für die Rate von Stillstandsperioden über eine dritte vorbestimmte Dauer repräsentativ ist, die kleiner als die zweite vorbestimmte Dauer und größer als die erste vorbestimmte Dauer ist;
wobei das Verfahren weiter einen Entscheidungsschritt (13) umfasst, in dessen Verlauf in Abhängigkeit von den berechneten synthetischen Variablen bestimmt wird, ob die Zählvorrichtung blockiert ist.

2. Verfahren nach Anspruch 1, **dadurch gekennzeichnet, dass** sich die dritte vorbestimmte Dauer über eine Periode erstreckt, die vor 90 Tagen vor dem letzten Stillstandsdatum (T₀) liegt.

3. Verfahren nach Anspruch 1 oder 2, **dadurch gekennzeichnet, dass** der Schritt des Erzeugens (12) weiter das Berechnen eines vierten Werts (V4) umfasst, der der Rate der Stillstandsperioden der Zählvorrichtung über ein Zeitintervall entspricht, das sich 90 Tage vor dem letzten Stillstandsdatum (T₀) erstreckt.

4. Verfahren nach einem der Ansprüche 1 bis 3, **dadurch gekennzeichnet, dass** der Schritt des Erzeugens (12) weiter das Berechnen eines fünften Werts (V5) umfasst, der der durchschnittlichen Dauer der Stillstandsperioden der Zählvorrichtung entspricht.

5. Verfahren nach einem der Ansprüche 1 bis 4, **dadurch gekennzeichnet, dass** der Schritt des Erzeugens (12) weiter das Berechnen eines sechsten Werts (V6) umfasst, der der längsten Stillstandsperiode der Zählvorrichtung in dem Satz der Stillstandsperioden der Zählvorrichtung entspricht.

6. Verfahren nach einem der Ansprüche 1 bis 5, **dadurch gekennzeichnet, dass** der Schritt des Erzeugens (12) weiter das Berechnen eines siebten Werts (V7) umfasst, der der längsten Periode entspricht, während der die gespeicherten Indexwerte größer sind als der minimale Schwellenwert signifikanten Verbrauchs.

7. Verfahren nach einem der Ansprüche 1 bis 6, **dadurch gekennzeichnet, dass** der Schritt des Erzeugens (12) weiter das Berechnen eines achten Werts (V8) umfasst, der der Anzahl von Perioden entspricht, während denen die gespeicherten Indexwerte aufeinanderfolgend größer sind als der minimale Schwellenwert signifikanten Verbrauchs.

8. Verfahren nach einem der Ansprüche 1 bis 7, **dadurch gekennzeichnet, dass** der Schritt des Erzeugens (12) weiter das Berechnen eines neunten Werts (V9) umfasst, der der Berechnung einer Blockierungswahrscheinlichkeit der Vorrichtung in Abhängigkeit von ihrem Herstellungsmodell und ihrem Inbetriebnahmejahr entspricht.

9. Verfahren nach einem der Ansprüche 1 bis 8, **dadurch gekennzeichnet, dass** der Entscheidungsschritt (13) den Einsatz eines überwachten maschinellen Lernmoduls umfasst, wobei das maschinelle Lernmodul im Laufe eines anfänglichen Trainingsschritts (131) trainiert wird.

10. Verfahren nach Anspruch 9, **dadurch gekennzeichnet, dass** es dafür geeignet ist, eine Vielzahl von Malen zum Einsatz gebracht zu werden, wobei der anfängliche Trainingsschritt (131) nur einmal zum Einsatz gebracht wird und ein Neutrainingsschritt (133) wiederholt gemäß einer Frequenz zum Einsatz gebracht wird, die kleiner ist als die Einsatzfrequenz des Verfahrens.

11. Verfahren nach Anspruch 9 oder 10, **dadurch gekennzeichnet, dass** das maschinelle Lernmodul ein Regressions- und Klassifikationsbaumverfahren zum Einsatz bringt,
wobei der Trainingsschritt (131) einen Schritt des Bereitstellens eines Trainingsdatensatzes (N) umfasst, der eine Vielzahl von Zählerdaten (N1-N500) umfasst, die jeweils eine Vielzahl von Indexwerten, die über die zweite vorbestimmte Dauer gespeichert wurden, und/oder berechnete synthetische Werte, sowie einen vorberechneten Entscheidungswert umfassen,
wobei jeder Entscheidungsbaum im Laufe des Trainingsschritts (131) auf Grundlage eines einzigen Teilsatzes (T1-T3) des Trainingsdatensatzes (N) trainiert wird.

12. Verfahren nach Anspruch 11, **dadurch gekennzeichnet, dass** das maschinelle Lernmodul für das Entscheidungsbaum-/waldverfahren ein Verfahren zur Klassifizierung der Zähler in mindestens zwei Klassen, blockiert und nicht blockiert, in Abhängigkeit von den erzeugten synthetischen Variablen (12) zum Einsatz bringt, wobei das Lernmodul auf Grundlage eines Trainingsdatensatzes trainiert wird, in dem die vorberechneten Entscheidungswerte eine Klasse aus den zwei Klassen umfassen.

13. Verfahren nach Anspruch 11, **dadurch gekennzeichnet, dass** das maschinelle Lernmodul ein überwachtes Regressionslernverfahren zum Einsatz bringt, um einen Blockierungswahrscheinlichkeitswert in Abhängigkeit von den erzeugten synthetischen Variablen (12) zu berechnen, wobei das Lernmodul auf Grundlage eines Trainingsdatensatzes trainiert wird, in dem die vorberechneten Entscheidungswerte einen Blockierungswahrscheinlichkeitswert umfassen.

14. Verfahren nach einem der Ansprüche 11 bis 13, **dadurch gekennzeichnet, dass** das Regressions- und Klassifikationsbaumverfahren ein Entscheidungsbaum-/waldverfahren umfasst.

15. Verfahren nach einem der Ansprüche 1 bis 14, **dadurch gekennzeichnet, dass** die Indexwerte pro 24-Stunden-Intervall gespeichert werden; wobei die erste vorbestimmte Dauer im Bereich zwischen 1 Tag und 60 Tagen liegt, wobei die zweite vorbestimmte Dauer im Wesentlichen zwei Jahren von im Wesentlichen 365 Tagen, das heißt im Wesentlichen 730 Tagen, entspricht und der dritte vorbestimmte Wert im Wesentlichen einem Jahr, das heißt im Wesentlichen 365 Tagen, entspricht.

16. Vorrichtung zum Erkennen der Blockierung von Zählvorrichtungen für den Verbrauch einer Ressource, zum Beispiel Wasser, Gas, Elektrizität, in einem Satz von Zählvorrichtungen; wobei jede Zählvorrichtung einen Indexwert berechnet, der vom gemessenen kumulierten Verbrauch abhängig ist;
wobei die Indexwerte jeder Zählvorrichtung in regelmäßigen Intervallen an ein Zentralisierungsorgan übertragen werden, das die Indexwerte mit ihrem Übertragungsdatum speichert;
die Differenz zwischen einem ersten Indexwert und einem zweiten Indexwert der Schätzung des Verbrauchs zwischen jeweils dem ersten zugehörigen Übertragungsdatum (T₀) und dem zweiten zugehörigen Übertragungsdatum entspricht; und wenn die Differenz kleiner ist als ein minimaler Schwellenwert signifikanten Verbrauchs, die Verbrauchsschätzung eine Stillstandsperiode der Zählvorrichtung definiert;
**dadurch gekennzeichnet, dass** sie umfasst:
- Mittel zum Auswählen (10) eines Teilsatzes von Zählvorrichtungen in dem Satz von Zählvorrichtungen, bei denen die Differenz der Indexwerte über eine erste vorbestimmte Dauer, die bis zur letzten Speicherung eines Indexwerts geht, kleiner ist als der minimale Schwellenwert signifikanten Verbrauchs, wodurch die letzte Stillstandsperiode der Zählvorrichtung gebildet wird; wobei das erste Datum (T₀) der letzten Stillstandsperiode dem letzten Stillstandsdatum (T₀) der Zählvorrichtung entspricht;
- Mittel zum Erfassen (11), für jede Zählvorrichtung des Teilsatzes von Zählvorrichtungen, der Indexwerte, die über eine zweite vorbestimmte Dauer gespeichert wurden, die vor dem letzten Stillstandsdatum (T₀) der Zählvorrichtung (20) liegt;
- Mittel zum Erzeugen (12) einer Vielzahl von synthetischen Variablen (Vn) in Abhängigkeit von den Indexwerten, die für jede Zählvorrichtung des Teilsatzes von Zählvorrichtungen erfasst wurden;
wobei die Erzeugungsmittel (12) dafür geeignet sind, Folgendes zu berechnen:
- einen ersten Wert (V1), der für die Dauer repräsentativ ist, seit der die gespeicherten Indexwerte des Zählers kleiner sind als der minimale Schwellenwert signifikanten Verbrauchs;
- einen zweiten Wert (V2) des Gesamtverbrauchs der Ressource, der von der Zählvorrichtung aufgezeichnet wurde; und
- einen dritten Wert (V3), der für die Rate von Stillstandsperioden über eine dritte vorbestimmte Dauer repräsentativ ist, die kleiner als die zweite vorbestimmte Dauer und größer als die erste vorbestimmte Dauer ist;
wobei die Vorrichtung auch Entscheidungsberechnungsmittel (13) umfasst, die dafür geeignet sind, für jede Zählvorrichtung des Teilsatzes von Zählvorrichtungen in Abhängigkeit von den berechneten synthetischen Variablen zu bestimmen, ob die Zählvorrichtung blockiert ist.

17. Zählsystem für eine Ressource, wie etwa Wasser, Gas oder Elektrizität, das einen Satz von Zählvorrichtungen (20) und ein Zentralisierungsorgan umfasst, welches eine Erkennungsvorrichtung (21) nach Anspruch 16 umfasst.

## Claims

1. A method for detecting the blocking of devices (20) for metering the consumption of a resource, for example water, gas, electricity, from a set of metering devices (20): each metering device calculating an index value depending on of the measured accumulated consumption;
said index values of each metering device being transmitted at regular intervals interval to a centralisation member storing said index values with their associated transmission date;
the difference between a first index value and a second index value corresponds to the estimate of the consumption between respectively the first date (T₀) and the second date of transmissions which are associated; and when said difference is less than a minimum significant consumption threshold value, said consumption estimate defines a period of stoppage of the metering device;
the method being **characterised in that** it comprises:
- a step (10) of selecting a subset of metering devices from said set of metering devices, for which the difference of the index values over a first predetermined duration, up to the last storage of an index value, is less than said minimum significant consumption threshold value, forming the last period of stoppage of the metering device; said first date (T₀) of said last stoppage period corresponding to the last date (T₀) of stoppage of the metering device;
and for each metering device of said subset of metering devices:
- a step (11) of acquiring the index values stored over a second predetermined duration, prior to the last date (T₀) of stoppage of said metering device (20);
- a step (12) of generating a plurality of synthesis variables (Vn) depending on said index values acquired for the second predetermined duration, comprising the calculation of:
- a first value (V1) representative of the duration for which said stored index values of the meter have been lower than said minimum significant consumption threshold value:
- a second value (V2) of total consumption of said resource which is recorded by said metering device; and
- a third value (V3) representative of the rate of stoppage periods over a third predetermined duration, less than the second predetermined duration and greater than the first predetermined duration;
the method further comprising a decision-making step (13) during which it is determined whether said metering device is blocked, depending on said calculated synthesis variables.

2. The method according to claim 1, **characterised in that** the third predetermined duration extends over a period prior to 90 days before the last stoppage date (T₀).

3. The method according to claim 1 or 2, **characterised in that** the generation step (12) further comprises the calculation of a fourth value (V4) corresponding to the rate of periods of stoppage of the metering device over a time interval extending 90 days before the last stoppage date (T₀).

4. The method according to any one of claims 1 to 3, **characterised in that** the generation step (12) further comprises the calculation of a fifth value (V5) corresponding to the average duration of the periods of stoppage of the metering device.

5. The method according to any one of claims 1 to 4, **characterised in that** the generation step (12) further comprises the calculation of a sixth value (V6) corresponding to the longest period of stoppage of the metering device from all periods of stoppage of the metering device.

6. The method according to any one of claims 1 to 5, **characterised in that** the generation step (12) further comprises the calculation of a seventh value (V7) corresponding to the longest period during which the values of stored indexes are greater than said minimum significant consumption threshold value.

7. The method according to any one of claims 1 to 6, **characterised in that** the generation step (12) further comprises the calculation of an eighth value (V8) corresponding to the number of periods during which the values of stored indexes are successively greater than said minimum significant consumption threshold value.

8. The method according to any one of claims 1 to 7, **characterised in that** the generation step (12) further comprises the calculation of a ninth value (V9) corresponding to the calculation of a probability of blocking of said device depending on its manufacturing model and its year of operation.

9. The method according to any one of claims 1 to 8, **characterised in that** the decision-making step (13) comprises the implementation of a supervised machine learning module, said machine learning module being trained during an initial training step (131).

10. The method according to claim 9, **characterised in that** it is adapted to be implemented a plurality of times, the initial training step (131) being implemented only once, and a retraining step (133) being implemented repeatedly, according to a frequency which is less than the frequency of implementation of the method.

11. The method according to claim 9 or 10, **characterised in that** said machine learning module implements a regression and classification tree method,
said training step (131) comprising a step of providing a set of training data (N), comprising a plurality of meter data (N1-N500), each including a plurality of index values stored over said second predetermined duration and/or calculated synthesis values, as well as a pre-calculated decision value,
each decision tree being trained, during said training step (131), from a single subset (T1-T3) of said training data set (N).

12. The method according to claim 11, **characterised in that** said decision tree forest method implements a method for classifying meters from at least two classes, blocked and unblocked, depending on said generated synthesis variables (12), said learning module being trained from a set of training data in which said pre-calculated decision values comprise a class from said two classes.

13. The method according to claim 11, **characterised in that** said machine learning module implements a regression supervised learning method in order to calculate a blocking probability value, depending on said generated synthesis variables (12), said training module being trained from a set of training data wherein said pre-calculated decision values comprise a blocking probability value.

14. The method according to any one of claims 11 to 13, **characterised in that** said regression and classification tree method comprises a decision tree forest method.

15. The method according to any one of claims 1 to 14, **characterised in that** said index values are stored at intervals of 24 hours; the first predetermined duration being comprised between 1 day and 60 days, the second predetermined duration corresponding substantially to two years of substantially 365 days, i.e. substantially 730 days, and the third predetermined value corresponding substantially to one year, i.e. substantially 365 days.

16. A device for detecting the blocking of devices for metering the consumption of a resource, for example water, gas, electricity, from a set of metering devices; each metering device calculating an index value depending on of the measured accumulated consumption;
said index values of each metering device being transmitted at regular intervals interval to a centralisation member storing said index values with their transmission date;
the difference between a first index value and a second index value corresponds to the estimate of the consumption between respectively the first date (T₀) and the second date of transmissions which are associated; and when said difference is less than a minimum significant consumption threshold value, said consumption estimate defines a period of stoppage of the metering device;
**characterised in that** it comprises:
- means (10) for selecting a subset of metering devices from said set of metering devices, for which the difference of the index values over a first predetermined duration, up to the last storage of an index value, is less than said minimum significant consumption threshold value, forming the last period of stoppage of the metering device; said first date (T₀) of said last stoppage period corresponding to the last date (T₀) of stoppage of the metering device;
- means (11) for acquiring, for each metering device of said subset of metering devices, the index values stored over a second predetermined duration, prior to the last date (T₀) of stoppage of said metering device (20) ;
- means (12) for generating a plurality of synthesis variables (Vn) depending on said index values acquired for each metering device of said subset of metering devices;
said generating means (12) being adapted to calculate:
- a first value (V1) representative of the duration for which said stored index values of the meter have been lower than said minimum significant consumption threshold value:
- a second value (V2) of total consumption of said resource which is recorded by said metering device; and
- a third value (V3) representative of the rate of stoppage periods over a third predetermined duration, less than the second predetermined duration and greater than the first predetermined duration;
the device also comprising decision-making calculation means (13) adapted to determine, for each metering device of said subset of metering devices, whether said metering device is blocked, depending on said calculated synthesis variables.

17. A system for metering a resource, such as water, gas or electricity, comprising a set of metering devices (20) and a centralisation member including a detection device (21) according to claim 16.
